# DEMANDE DE BREVET EUROPEEN

(11) **EP 4 725 355 A1**
(43) Date de publication de la demande: **15.04.2026**
(21) Numéro de dépôt: 25199064.4
(22) Date de dépôt: 29.08.2025
(51) Int. Cl.: A44C 9/00, A44C 11/00, A44C 27/00, B22F 3/115, B22F 3/15, B22F 3/20, B22F 5/10, B22F 7/06, B22F 7/08, B33Y 80/00, G04B 37/22, G04B 45/00, B22F 3/105, A44C 15/00, G04B 19/28, B22F 5/00, B33Y 10/00, C22C 5/02, C22C 5/04, C22C 5/06, C22C 1/04, B22F 3/24, B22F 10/28

(54) **MOTIFS CONTROLES POUR APPLICATIONS HORLOGERES ET JOAILLIERES**

(30) Priorité: 10.10.2024 CH 11152024
(71) Demandeur: Richemont International S.A., 1752 Villars-sur-Glâne (CH)
(72) Inventeur: GIRAUD, Damien, 90100 Joncherey (FR); GENG, Clément, 4053 Basel (CH)
(74) Mandataire: Novagraaf International SA

(57) **Abrégé**

L'invention concerne un procédé de fabrication d'une pièce d'horlogerie ou de joaillerie (2) comprenant les étapes suivantes :
- réaliser une ébauche de la pièce d'horlogerie ou de joaillerie (2) dans une première matière,
- réaliser une étape intermédiaire de finition de l'ébauche (1),
- fabriquer avec une poudre métallique dans une deuxième matière, différente de la première matière, par un procédé de consolidation métallurgique de poudre sur l'ébauche, au moins une portion supplémentaire (20) de la pièce d'horlogerie ou de joaillerie (2).

## Description

La présente invention concerne de manière générale le domaine de l'horlogerie et de la joaillerie, plus particulièrement le domaine de la fabrication de composants horlogers et joailliers, comme par exemple les carrures ou les bagues et bracelets, ou encore les lunettes, les boucles, les fermoirs, les boucles d'oreille, les broches oules boutons de manchette.

Des procédés de fabrications, comme celui divulgué par le document JPH0610011A notamment pour des anneaux, sont connus dans l'art antérieur. En particulier, dans ce document, le pressage se fait de manière axiale. Il en résulte une limitation sur les motifs réalisés sur la tranche de la bague.

Toutefois, il est désirable d'améliorer l'esthétique, notamment les transitions entre matériaux et/ou les contrastes, d'améliorer et/ou faciliter la fabrication des composants horlogers ou joailliers.

La présente invention a ainsi pour but de proposer une nouvelle fabrication de composants horlogers ou joailliers.

Dans un premier aspect, l'invention concerne un procédé de fabrication d'une pièce d'horlogerie ou de joaillerie comprenant les étapes suivantes :
- réaliser une ébauche de la pièce d'horlogerie ou de joaillerie dans une première matière,
- réaliser une étape intermédiaire de finition de l'ébauche,
- fabriquer avec une poudre métallique dans une deuxième matière, de préférence différente de la première matière, par un procédé de consolidation métallurgique de poudre sur l'ébauche, au moins une portion supplémentaire de la pièce d'horlogerie ou de joaillerie, de préférence de sorte à fabriquer la pièce d'horlogerie ou de joaillerie monolithique.

Ceci permet de réaliser des motifs esthétiques améliorés par rapport aux possibilités offertes par l'art antérieur, notamment en améliorant la qualité des interfaces et des transitions, tout en facilitant la fabrication des composants horlogers ou joailliers et en améliorant la tenue mécanique, notamment au niveau des transitions. En outre, il est possible de faire de nouvelles créations de pièce par assemblage de matériaux notamment s'ils possèdent des colorations différentes. Un des avantages de la présente invention est de réaliser des motifs bi-matière (deux ou plusieurs couleurs, deux ou plusieurs matières) de façon radiale (c'est-à-dire orientés sur le pourtour de l'objet) de façon contrôlée et répétable. Pour cela, un premier objet est fabriqué puis un ajout de matière est réalisé notamment via de la poudre ou de la matière projetée en excès. Un parachèvement (par exemple usinage) permet de retrouver les motifs du premier objet. Ceci permet de réaliser une pièce d'horlogerie ou de joaillerie monolithique ou d'un seul tenant.

Il est ainsi possible d'obtenir une bonne densification de la poudre sur les parois latérales. Dans le cadre de la présente invention, il est avantageux d'utiliser par exemple du HIP (« Hot Isotatic Pressing » en anglais, également appelé pressage à chaud isostatique) ou des techniques de projection qui permettent d'obtenir une bonne densification, même dans les parois latérales. En effet, il est ainsi possible de passer outre la limitation de la projection en deux dimensions ou du pressage uni axial, rendant possible le multi-matière dans les trois dimensions.

L'invention peut aussi être définie selon les caractéristiques suivantes, prises individuellement ou en combinaison.

Avantageusement, le procédé comprend en outre l'étape suivante :
- retirer un excès de la première matière et/ou de la deuxième matière par un procédé d'enlèvement de matière, tel que usinage, ablation laser, électroérosion, ou meulage, polissage, tribofinition ou reprise manuelle joaillière.

Ceci permet de découvrir une portion comprenant la matière recouverte ou de faire un traitement de surface sur la deuxième matière, tout en améliorant l'esthétique et la tenue mécanique (par exemple transition entre les deux matières).

Avantageusement, le procédé comprend en outre l'étape suivante :
- enlever un masque, ou un surplus de matière, formé par la deuxième matière afin de révéler un premier motif réalisé dans la première matière.

Avantageusement, la portion supplémentaire est agencée sur une portion radiale de la pièce d'horlogerie ou de joaillerie.

En d'autres termes, la portion supplémentaire peut se trouver sur le rayon ou le pourtour d'une pièce de révolution, de préférence pour réaliser un motif.

Ceci permet de réaliser des motifs ou des décorations sur la portion radiale.

Avantageusement, la portion supplémentaire est agencée sur une portion latérale de la pièce d'horlogerie ou de joaillerie.

Avantageusement, le procédé de consolidation de métallurgique de poudre est choisi parmi le pressage à chaud, le SPS (« Spark Plasma Sintering » en anglais, également nommé frittage flash) ou le HIP (« Hot Isostatic Pressing » en anglais, également nommé pressage à chaud isostatique), ou pressage sous charge ou HP (« Hot pressing » en anglais, également nommé pressage à chaud)

Avantageusement, la méthode de fabrication de l'au moins une portion supplémentaire est choisie parmi le pressage à chaud, le frittage sous pression, le frittage sans pression tel que le frittage libre, la projection de matière ou la fusion avec ajout de matière.

Avantageusement, la méthode de fabrication est choisie parmi le frittage sous pression, tel que HIP ou sinter HIP, SPS, FAST (« Field Assisted Sintering Technology » en anglais, également nommé technologie de frittage en champ assisté), ou le frittage par courant continu (DCS)

Avantageusement, une paramétrie de pressage est comprise entre 500 et 2000 bars, préférentiellement entre 1200 et 2000 bars, et/ou des températures correspondant à 60% à 98% de la température de fusion de l'alliage de la première matière et/ou de la deuxième matière.

Ceci permet de définir la paramétrie notamment pour le pressage sous HIP.

Avantageusement, une paramétrie de pressage est comprise entre 10 à 200 MPa de préférence en utilisant au moins une matrice graphite, et jusqu'à 800 MPa de préférence en utilisant au moins une matrice tungstène et/ou acier. De préférence dans ces cas, les températures correspondent à 60% à 98% de la température de fusion de l'alliage de la première matière et/ou de la deuxième matière.

Ceci permet de définir une paramétrie notamment pour le pressage à chaud ou le SPS.

Avantageusement, une température de fusion de la deuxième matière est inférieure à une température de fusion de la première matière.

Ceci permet d'éviter que la première matière entre en fusion. En effet, si la température de fusion de la première matière est très (trop) inférieure à celle de la deuxième matière, alors au pressage, un risque d'entrée en fusion de la première matière est possible sans consolider la poudre de la deuxième matière.

Avantageusement, une température de fusion de la deuxième matière est supérieure à une température de fusion de la première matière.

Avantageusement, l'étape intermédiaire de finition de l'ébauche est choisie parmi l'ébavurage, le sablage, le polissage, le meulage, l'usinage, le tournage, le décolletage, l'électro-polissage, la finition laser, les décorations telles que côtes de Genève, satinage, microbillage, perlage, et/ou toute opération d'enlèvement de matière.

Ceci permet d'accentuer la qualité des contrastes entre les matières, notamment suivant les finitions. En outre, les décors permettent d'améliorer les contrastes de couleur par rapport à un poli miroir.

Avantageusement, la méthode de réalisation de l'ébauche est choisie parmi l'enlèvement de matière, tel que l'usinage, le fraisage, le perçage, l'emboutissage, le découpage laser ou fil ; la déformation de matière telle que l'étampage ou l'extrusion ; la fabrication additive telle que la fabrication additive en lit de poudre avec laser ou avec électrons, la projection de liant (binder jetting), la lithographie, le moulage par injection ou projection (mold jetting), la projection de nanoparticule (nanoparticle jetting) ; le dépôt direct de matière, telle que le dépôt direct de métal.

Avantageusement, la méthode concerne également le DMD (« Direct Metal Deposition » en anglais, également nommé déposition métallique directe).

Avantageusement, la première matière et/ou la deuxième matière est choisie parmi les métaux précieux, un alliage d'or, l'or 18 carat, par exemple l'or jaune 18 carat, l'or rose 18 carat, l'or gris 18 carat, l'or rouge 18 carat, l'or 14 carat, l'or supérieur à 18 carats, les alliages à base de platine tel que Pt-Ru, Pt-Cu, Pt-Cu-Ga, préférentiellement avec des teneur supérieures ou égales à 95% en platine ou les alliages d'argent.

Avantageusement, la première matière et/ou la deuxième matière est choisie parmi les alliages de cuivre, les alliages de titane ou les alliages d'acier.

Avantageusement, des motifs réalisés avec la première matière et/ou la deuxième matière ont une taille inférieure à 1 mm, de préférence inférieure à 0.5 mm.

Avantageusement, le procédé comprend en outre l'étape finale suivante :
- parachever la pièce d'horlogerie ou de joaillerie .

En d'autres termes, l'invention consiste en une succession de plusieurs étapes :
1) réaliser une forme ou une ébauche en une matière ou alliage « A » via des techniques :
   - d'enlèvement de matière comme de l'usinage, du fraisage, du perçage, de l'emboutissage, du découpage laser, fil ou mécanique,
   - par déformation de matière comme de l'étampage ou de l'extrusion,
   - par méthode additive comme les techniques de fabrication additive lit de poudre (laser, électron), dépôt direct de matière (DMD Direct Metal déposition)
   - et réaliser étape de finition intermédiaire (de la pièce A).

Cette forme peut notamment être de révolution sous la forme d'une bague, d'un bracelet, une lunette ou d'une carrure.

La forme obtenue peut avoir subi un parachèvement afin de finir les surfaces et ainsi avoir une meilleure définition sur le motif multi-matière.

Une alternative à la circularité serait d'avoir une extrusion du décor dans une seule direction.

L'invention peut comprendre en outre l'étape :
2) remplir les cavités ou les pourtours (ou les surfaces) de la forme ou de l'ébauche faite en matière ou alliage « A » avec préférentiellement de la poudre de nature alliage «B» qui est consolidée, par exemple par frittage sous pression (HIP, sinter HIP) ou sans pression (dit frittage libre), par projection ou par fusion.

La température de fusion de l'alliage « B » se situe en-dessous de la température de fusion de l'alliage « A ». Lors de l'étape de frittage, le matériaux « A » reste donc à l'état solide.

De la diffusion d'éléments peut avoir lieu entre « A » et «B» amenant à une continuité métallurgique. Cette continuité peut être franche ou bien diffuse (c'est-à-dire présentant un gradient de composition entre A et B) suivant les conditions de consolidation de la poudre. En outre, un post traitement thermique peut être réalisé afin d'assurer une (meilleure) diffusion des éléments métalliques.

La paramétrie de pressage sous HIP peut être comprise entre 500 et 2000 bars, avantageusement entre 1200 et 2000 bars, à des températures correspondant à 60% à 98% de la température de fusion de l'alliage.

L'invention peut comprendre en outre l'étape :
3) retirer l'excès de matière de préférence par usinage ou meulage, afin de faire apparaitre les deux couleurs d'alliages.

L'invention peut concerner en outre l'utilisation de la même matière pour la première et la deuxième poudre, par exemple pour réaliser des structures monochromes mais difficiles à réaliser sinon pour des raisons de géométrie ou de coût (ex: une ébauche en or « facile » à faire et une technique 3D pour faire la géométrie « complexe » uniquement là où cela se justifie).

L'invention peut concerner en outre l'utilisation de trois poudres différentes, c'est-à-dire qu'après la finition de la pièce, on consolide une matière C et on reprend par usinage le tout. Ca permettrait d'élargir les possibilités de fabrication, en particulier par projection de matière.

L'invention concerne en outre une pièce d'horlogerie ou de joaillerie fabriquée avec le procédé selon le premier aspect.

Un autre aspect de la présente invention concerne une pièce d'horlogerie ou de joaillerie comprenant :
- une ébauche (finie) de pièce d'horlogerie ou de joaillerie réalisée dans une première matière,
- au moins une portion supplémentaire de pièce d'horlogerie ou de joaillerie réalisée dans une deuxième matière, de préférence différente de la première matière, et
   dans laquelle une poudre de la portion supplémentaire est consolidée métallurgiquement avec l'ébauche.

Avantageusement, la pièce d'horlogerie ou de joaillerie peut subir toutes les étapes du procédé de la présente invention ou avoir toutes les caractéristiques et/ou avantages mentionnés.

De préférence, la portion supplémentaire est agencée sur une portion radiale de la pièce d'horlogerie ou de joaillerie.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
la figure 1 représente une ébauche d'une pièce d'horlogerie ou de joaillerie réalisée à l'aide du procédé selon un premier mode de réalisation de la présente invention, réalisée dans une première matière,
la figure 2 représente la pièce d'horlogerie ou de joaillerie avec une portion supplémentaire dans une deuxième matière,
la figure 3 représente la pièce d'horlogerie ou de joaillerie après retrait d'un excès de la première matière ou de la deuxième matière,
la figure 4 représente la pièce d'horlogerie ou de joaillerie vue en coupe,
la figure 5 représente la pièce d'horlogerie ou de joaillerie selon un autre mode de réalisation.

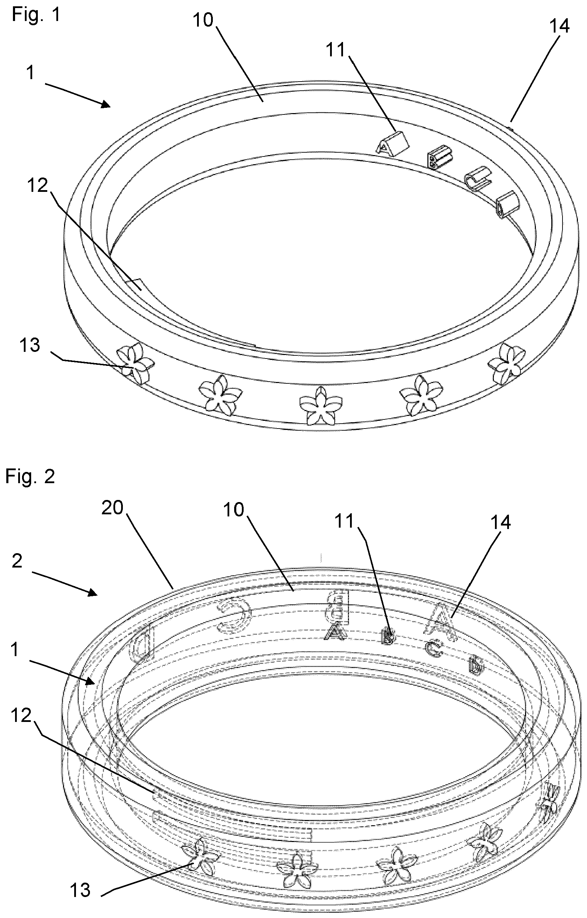

La figure 1 représente une ébauche 1 d'une pièce d'horlogerie ou de joaillerie 2 (visible en figures 2 à 4) réalisée à l'aide du procédé selon la présente invention, réalisée dans une première matière. Dans l'exemple de la figure 1, l'ébauche 1 (ainsi que la pièce d'horlogerie ou de joaillerie 2) a sensiblement une forme d'anneau. Ce peut être par exemple une bague, un bracelet, un pendentif ou une carrure.

Le procédé de fabrication de la pièce d'horlogerie ou de joaillerie 2 comprenant au moins les étapes suivantes :
- réaliser une ébauche 1 de la pièce d'horlogerie ou de joaillerie 2 dans une première matière,
- réaliser une étape intermédiaire de finition de l'ébauche 1.

L'ébauche 1 comprend de préférence une portion de base 10, telle qu'une portion annulaire 10, notamment quand l'ébauche 1 est en forme d'anneau. Il est toutefois possible de prévoir d'autres formes, comme par exemple pour des fermoirs, des prisme de base rectangulaire, et s'il s'agit d'une boucle, une forme de U.

L'ébauche 1 peut comprendre en outre au moins un élément décoratif 13, un élément informatif 11 et/ou une portion technique 12.

L'élément décoratif 13 forme un motif, de préférence prédéterminé, comme par exemple une fleur comme illustré à la figure 1. Dans un mode de réalisation préféré, l'élément décoratif 13 est en relief, ou fait saillie depuis la portion de base 10.

L'élément informatif 11 est par exemple un lettré ou un message textuel. Cela permet d'afficher une information quelconque sur l'ébauche 1 et/ou la pièce d'horlogerie ou de joaillerie 2. Il est possible de prévoir que l'élément informatif 11 soit directement visible d'un utilisateur sur la version finale de la pièce d'horlogerie ou de joaillerie 2. Alternativement, il est possible de prévoir que l'élément informatif 11 soit masqué de l'utilisateur dans la version finale de la pièce d'horlogerie ou de joaillerie 2, comme par exemple pour des raisons de traçabilité, de sécurité ou toute autre raison.

L'élément technique 12 est par exemple un tenon ou une rainure faisant saillie depuis la portion de base 10. Il peut être utilisé pour fixer l'ébauche 1 ou la pièce d'horlogerie ou de joaillerie 2, servir de portion d'attache ou d'accroche sur la version finale de la pièce d'horlogerie ou de joaillerie 2 (par exemple pour une portion d'accroche dans le cas d'un pendentif) ou de portion d'attache ou d'accroche ou de repère pour une étape intermédiaire de fabrication, comme le tournage ou le finissage.

Dans l'exemple de la figure 1, l'élément informatif 11 et l'élément technique 12 sont positionnés sur une portion radiale interne de l'ébauche 1 (et de la pièce d'horlogerie ou de joaillerie 2) et l'élément décoratif 13 est positionné sur une portion radiale externe de l'ébauche 1 (et de la pièce d'horlogerie ou de joaillerie 2). Il est possible de prévoir d'autres positions pour ces éléments, comme inverser les positions radiales internes ou externes, ou positionner ces éléments sur une face latérale. Notons que le mode de réalisation préféré est sur une portion radiale. La position radiale des éléments ajoute une part de complexité car la poudre ne se trouve pas dans le sens de direction des techniques de pressage. Des techniques de pressages uni axiales (comme le HIP) permettent d'exercer une pression latérale pour consolider la poudre, comme également la projection thermique qui le permet.

Dans un autre mode de réalisation, il est possible de prévoir que les éléments faisant saillie sont prévus pour être formés en creux, notamment dans la portion de base 10.

Il convient de réaliser une étape intermédiaire de finition de l'ébauche 1. Cette étape intermédiaire de finition permet d'avoir une ébauche de très bonne qualité géométrique et/ou esthétique. En général, les pièces imprimées 3D présentent des «marches» ou des «stries» sur leur surface, défauts que nous retrouvons à l'interface si nous réalisons un surmoulage direct (sans finition). C'est notamment en cela que la présente invention améliore les transitions.

Ensuite, il convient de compléter l'ébauche 1 comme expliqué ci-après en référence à la figure 2.

La figure 2 représente la pièce d'horlogerie ou de joaillerie 2 avec une portion supplémentaire 20 dans une deuxième matière, réalisée sur l'ébauche 1, et/ou recouvrant au moins partiellement l'ébauche 1.

Le procédé peut comprendre l'étape suivant :
- fabriquer avec une poudre métallique dans une deuxième matière, différente de la première matière, par fabrication additive ou par un procédé de consolidation métallurgique de poudre sur l'ébauche, au moins une portion supplémentaire 20 de la pièce d'horlogerie ou de joaillerie 2 (ou de l'ébauche 1).

La portion supplémentaire 20 recouvre (ou enveloppe) l'ébauche 1 afin de former une couche supérieure de la pièce d'horlogerie ou de joaillerie 2.

Il est possible de prévoir que la portion supplémentaire 20 affleure les éléments informatif 11, technique 12 et/ou décoratif 13.

Alternativement, il est possible de prévoir un saut ou une distance (positive ou négative, c'est-à-dire en creux ou en protrusion) entre la portion supplémentaire 20 et les éléments informatif 11, technique 12 et/ou décoratif 13.

Notons qu'il est possible de prévoir des éléments additionnels 14. Ils font de préférence partie de l'ébauche et sont donc fabriqués avec (usinage ou fabrication additive).

De préférence, des motifs réalisés, par exemple avec un ou plusieurs des éléments 11-14 avec la première matière et/ou la deuxième matière ont une taille inférieure à 5 mm, de préférence inférieure à 1 mm, de préférence inférieure à 0.5 mm. Ceci permet de couvrir tant des détails fins que des pans de surface de la pièce.

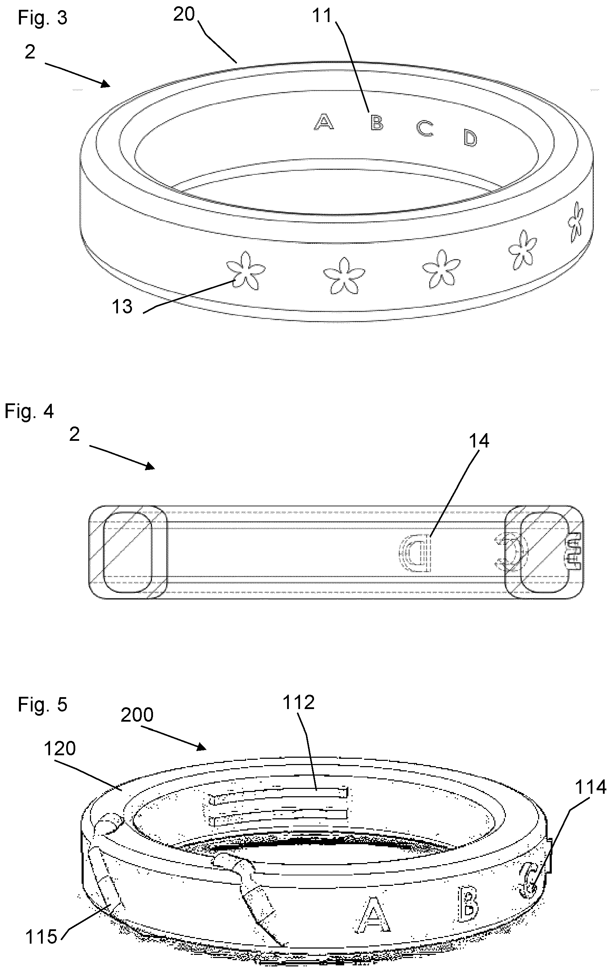

La figure 3 représente la pièce d'horlogerie ou de joaillerie 2 après retrait d'un excès de la première matière ou de la deuxième matière.

Le procédé de fabrication peut comprendre en outre l'étape suivante :
- retirer un excès de la première matière et/ou de la deuxième matière par un procédé d'enlèvement de matière, tel que l'usinage ou le meulage.

Ceci permet de retirer un excès de matière par exemple au niveau de la portion supplémentaire 20 et/ou des éléments 11, 12, 13, 14, notamment à des fins de finition de la pièce d'horlogerie ou de joaillerie 2.

La figure 4 représente la d'horlogerie ou de joaillerie vue en coupe 2.

La figure 5 représente la pièce d'horlogerie ou de joaillerie 200 selon un autre mode de réalisation.

Dans ce mode de réalisation, l'élément technique 112 ainsi que l'élément additionnel 114 font saillie de la portion supplémentaire 120.

Il est possible de prévoir en outre d'autres éléments additionnels 115 faisant saillie depuis la portion supplémentaire, notamment à des fins de préhension. Les éléments 115 sont de préférence des éléments décoratifs faisant partie de l'ébauche et/ou de la pièce, et qui peuvent être différents sur la plan radial et axial.

On comprendra que diverses modifications et/ou améliorations évidentes pour l'homme du métier peuvent être apportées aux différents modes de réalisation de l'invention décrits dans la présente description.

Notons enfin qu'il est possible de combiner les modes de réalisations autant que possible ou nécessaire.

## Revendications

1. Procédé de fabrication d'une pièce d'horlogerie ou de joaillerie (2) comprenant les étapes suivantes :
- réaliser une ébauche (1) de la pièce d'horlogerie ou de joaillerie (2) dans une première matière,
- réaliser une étape intermédiaire de finition de l'ébauche (1),
- fabriquer avec une poudre métallique dans une deuxième matière, de préférence différente de la première matière, par un procédé de consolidation métallurgique de poudre sur l'ébauche (1), au moins une portion supplémentaire (20) de la pièce d'horlogerie ou de joaillerie (2),
dans lequel la portion supplémentaire (20) est agencée sur une portion radiale de la pièce d'horlogerie ou de joaillerie (2).

2. Procédé de fabrication d'une pièce d'horlogerie ou de joaillerie (2) comprenant les étapes suivantes :
- réaliser une ébauche (1) de la pièce d'horlogerie ou de joaillerie (2) dans une première matière,
- réaliser une étape intermédiaire de finition de l'ébauche (1),
- fabriquer avec une poudre métallique dans une deuxième matière, de préférence différente de la première matière, par un procédé de consolidation métallurgique de poudre sur l'ébauche (1), au moins une portion supplémentaire (20) de la pièce d'horlogerie ou de joaillerie (2),
dans lequel le procédé de consolidation métallurgique de poudre est choisi parmi le pressage à chaud, le SPS ou le HIP, et/ou
dans lequel la méthode de fabrication d'au moins une portion supplémentaire (20) est choisie parmi le pressage à chaud, le frittage sous pression, le frittage sans pression tel que le frittage libre ou la fusion avec ajout de matière.

3. Procédé de fabrication selon l'une des revendications précédentes, comprenant en outre l'étape suivante :
- retirer un excès de la première matière et/ou de la deuxième matière par un procédé d'enlèvement de matière, tel que usinage, ablation laser, électroérosion ou meulage.

4. Procédé de fabrication selon l'une des revendications précédentes, comprenant en outre l'étape suivante :
- enlever un masque, ou un surplus de matière, formé par la deuxième matière afin de révéler un premier motif réalisé dans la première matière.

5. Procédé de fabrication selon l'une des revendications précédentes, dans lequel une paramétrie de pressage est comprise entre 500 et 2000 bars, préférentiellement entre 1200 et 2000 bars, et/ou des températures correspondant à 60% à 98% de la température de fusion de l'alliage de la première matière et/ou de la deuxième matière.

6. Procédé de fabrication selon l'une des revendications précédentes, dans lequel une paramétrie de pressage est comprise entre 10 à 200 MPa de préférence en utilisant au moins une matrice graphite, et jusqu'à 800 MPa de préférence en utilisant au moins une matrice tungstène et/ou acier.

7. Procédé de fabrication selon l'une des revendications précédentes, dans lequel une température de fusion de la deuxième matière est inférieure à une température de fusion de la première matière.

8. Procédé de fabrication selon l'une des revendications précédentes, dans lequel l'étape intermédiaire de finition de l'ébauche (1) est choisie parmi l'ébavurage, le sablage, le polissage, le meulage, l'usinage, le tournage, le décolletage, l'électro polissage, la finition laser, les décorations telles que côtes de Genève, satinage, microbillage, perlage, et/ou toute opération d'enlèvement de matière.

9. Procédé de fabrication selon l'une des revendications précédentes, dans lequel la méthode de réalisation de l'ébauche (1) est choisie parmi l'enlèvement de matière, tel que l'usinage, le fraisage, le perçage, l'emboutissage ; la déformation de matière telle que l'étampage ou l'extrusion ; la fabrication additive telle que la fabrication additive en lit de poudre avec laser ou avec électrons ; le dépôt direct de matière, telle que le dépôt direct de métal.

10. Procédé de fabrication selon l'une des revendications précédentes, dans lequel la première matière et/ou la deuxième matière est choisie parmi les métaux précieux, un alliage d'or, l'or 18 carat, par exemple l'or jaune 18 carat, l'or rose 18 carat, l'or gris 18 carat, l'or rouge 18 carat, l'or 14 carat, l'or supérieur à 18 carats, les alliages à base de platine tel que Pt-Ru, Pt-Cu, Pt-Cu-Ga, préférentiellement avec des teneurs supérieures ou égales à 95% en platine ou les alliages d'argent.

11. Procédé de fabrication selon l'une des revendications précédentes, dans lequel la première matière et/ou la deuxième matière est choisie parmi les alliages de cuivre, les alliages de titane ou les alliages d'acier.

12. Procédé de fabrication selon l'une des revendications précédentes, dans lequel des motifs réalisés avec la première matière et/ou la deuxième matière ont une taille inférieure à 5 mm, de préférence inférieure à 1 mm, de préférence inférieure à 0.5 mm.

13. Procédé de fabrication selon l'une des revendications précédentes, comprenant en outre l'étape finale suivante :
- parachever la pièce d'horlogerie ou de joaillerie (2).

14. Pièce d'horlogerie ou de joaillerie (2) comprenant :
- une ébauche (1) de pièce d'horlogerie ou de joaillerie réalisée dans une première matière,
- au moins une portion supplémentaire (20) de pièce d'horlogerie ou de joaillerie réalisée dans une deuxième matière, de préférence différente de la première matière, et
dans laquelle une poudre de la portion supplémentaire (20) est consolidée métallurgiquement avec l'ébauche.

15. Pièce d'horlogerie ou de joaillerie selon la revendication précédente, dans laquelle la portion supplémentaire (20) est agencée sur une portion radiale de la pièce d'horlogerie ou de joaillerie (2).

16. Pièce d'horlogerie ou de joaillerie selon l'une des revendications 14 à 15, dans laquelle la consolidation métallurgique de poudre est réalisée par pressage à chaud, SPS ou HIP, et/ou
l'au moins une portion supplémentaire (20) est fabriquée par pressage à chaud, frittage sous pression, frittage sans pression tel que le frittage libre ou fusion avec ajout de matière.
